# FASCICULE DE BREVET EUROPEEN

(11) **EP 1 869 823 B1**
(45) Date de publication et mention de la délivrance du brevet: **19.01.2011**
(21) Numéro de dépôt: 06726153.7
(22) Date de dépôt: 30.03.2006
(51) Int. Cl.: H04L 9/08

(54) **Procédé de communication entre un lecteur et un marqueur d'identification sans fil, lecteur et marqueur associés**
Verfahren zur Kommunikation zwischen einem Leser und einem drahtlosen Identifikationsmarker, assoziierter Leser und Marker
Method for communicating between a reader and a wireless identification marker, associated reader and marker

(30) Priorité: 15.04.2005 FR 0503821
(43) Date de publication de la demande: 26.12.2007
(73) Titulaire: MORPHO, 75015 Paris (FR)
(72) Inventeur: CHABANNE, Hervé, F-78200 Mantes la Jolie (FR)
(74) Mandataire: Cabinet Plasseraud
(86) Numéro de dépôt international: PCT/FR2006/000703
(87) Numéro de publication internationale: WO 2006/108940

(56) Documents cités:
- CHRISTIAN CACHIN,UELI MAURER: "Linking Information Reconciliation and Privacy Amplification" JOURNAL OF CRYPTOLOGY, 1997, pages 1-12, XP002337938 USA
- LIU, VAN TILBORG, VAN DIJK: "A practical protocol for advantage distillation and information reconciliation" DESIGNS, CODES AND CRYPTOGRAPHY, 2003, pages 39-62, XP002337939 NETHERLANDS
- BRASSARD, SALVAIL: "Secret Key Reconciliation by Public Discussion" ADVANCES IN CRYPTOLOGY - EUROCRYPT '93, 1998, pages 410-423, XP002337940 USA
- GANDER M J; MAURER U M: "On the secret-key rate of Binary Random Variables" PROCEEDINGS. 1994 IEEE INTERNATIONAL SYMPOSIUM ON INFORMATION THEORY, 1994, XP002337941 USA

## Description

La présente invention concerne la communication entre un lecteur et un marqueur d'identification sans fil.

On entend par marqueur d'identification sans fil, toute entité sans fil comprenant un composant de dimensions réduites, constitué d'un circuit et de moyens d'émission/réception. Le marqueur peut par exemple être une étiquette d'identification par fréquence radio RFID ("Radio-Frequency IDentification"), dont les moyens d'émission/réception comprennent une antenne radio. Il peut également s'agir d'une carte à puce sans contact. Un marqueur de type infrarouge peut aussi être envisagé.

De tels marqueurs sans fil sont connus et capables de transmettre, à la demande d'un lecteur d'identification sans fil, un identifiant unique d'une centaine de bits à quelques mètres de distance.

Certains de ces marqueurs, comme les étiquettes RFID par exemple, ont de faibles capacités de calcul. Cela empêche d'envisager d'en sécuriser les transmissions avec un lecteur correspondant, au moyen des solutions classiques à base d'arithmétique.

Toutefois, un usage de ces marqueurs ne peut se concevoir et se généraliser que s'il prévoit des mécanismes de sécurité suffisamment fiables.

A cet effet, il a été proposé d'exploiter le bruit inhérent au canal de communication entre un marqueur et un lecteur correspondant pour assurer la confidentialité des échanges en présence d'un attaquant passif, c'est-à-dire d'un attaquant se contentant d'écouter les échanges sans interagir avec le marqueur ou le lecteur.

Cependant, même si le protocole proposé à cet effet a le mérite d'être simple dans sa mise en oeuvre, il est basé sur l'hypothèse que les erreurs auxquelles l'attaquant est confronté lors de son écoute des échanges sont indépendantes de celles introduites par le canal de communication bruité entre le marqueur et le lecteur.

En pratique, cette hypothèse n'est pas toujours vérifiée. En particulier, l'attaquant pourrait disposer de capacités d'écoute suffisantes pour déterminer par corrélation, à partir des données qu'il reçoit, les données reçues par le marqueur ou le lecteur.

Un but de la présente invention est d'offrir un niveau de sécurité plus satisfaisant entre un lecteur et un marqueur sans fil.

L'invention propose ainsi un procédé de communication entre un lecteur d'identification sans fil et un marqueur d'identification sans fil par l'intermédiaire d'un canal bruité, comprenant :
/a/ la transmission d'une première chaîne numérique depuis le lecteur vers le marqueur ;
/b/ la réception, au marqueur, d'une deuxième chaîne numérique correspondant à la première chaîne numérique, aux erreurs introduites par le canal bruité près ;
/c/ l'introduction d'erreurs artificielles dans l'une au moins de la première et de la deuxième chaîne numérique ;
/d/ une phase de distillation d'avantage dans laquelle on détermine, au lecteur, une nouvelle première chaîne numérique à partir de la première chaîne numérique et on détermine, au marqueur, une nouvelle deuxième chaîne numérique à partir de la deuxième chaîne numérique, de façon à prendre l'avantage sur un éventuel attaquant passif ;
/e/ une phase de réconciliation d'information dans laquelle on applique un protocole de correction d'erreurs à la nouvelle première et la nouvelle deuxième chaîne numérique, de façon que, à l'issue de l'étape /e/, la nouvelle première et la nouvelle deuxième chaîne numérique soient identiques avec un niveau de probabilité prédéterminé ; et
/f/ une phase d'amplification de secret dans laquelle on applique une fonction de hachage à la nouvelle première et à la nouvelle deuxième chaîne numérique.

L'introduction d'erreurs artificielles dans la première et/ou la deuxième chaîne numérique, en plus des erreurs naturelles liées au bruit introduit par le canal de communication bruité, permet d'atténuer voire de supprimer l'éventuelle corrélation des erreurs impactant le lecteur ou le marqueur d'une part et l'attaquant écoutant le canal bruité d'autre part. On complexifie ainsi la tâche de l'attaquant qui n'est plus capable de déduire des informations qu'il acquiert, les informations reçues par le marqueur.

Une telle introduction d'erreurs artificielles, qui peut consister en la modification de quelques valeurs numériques, par exemple choisies de façon aléatoire, de la première et/ou la deuxième chaîne numérique, est en outre de mise en oeuvre simple.

Les étapes du procédé sont avantageusement mises en oeuvre pour que la nouvelle première et la nouvelle deuxième chaîne numérique soient identiques avec un niveau de probabilité prédéterminé, de préférence proche de 100%. Ainsi, la fonction de hachage délivrera une valeur réduite identique lorsqu'elle est appliquée à la nouvelle première et à la nouvelle deuxième chaîne numérique.

L'étape /d/ peut avantageusement être répétée un nombre de fois dépendant du bruit estimé sur le canal bruité.

L'invention propose en outre un lecteur d'identification sans fil apte à communiquer avec un marqueur d'identification sans fil par l'intermédiaire d'un canal bruité, comprenant :
- des moyens pour transmettre une première chaîne numérique vers le marqueur ;
- des moyens pour introduire des erreurs artificielles dans la première chaîne numérique ;
- des moyens pour déterminer une nouvelle première chaîne numérique à partir de la première chaîne numérique, de façon à prendre l'avantage sur un éventuel attaquant passif ;
- des moyens pour appliquer un protocole de correction d'erreurs à la nouvelle première chaîne numérique ; et
- des moyens pour appliquer une fonction de hachage à la nouvelle première chaîne numérique.

L'invention propose également un marqueur d'identification sans fil apte à communiquer avec un lecteur d'identification sans fil par l'intermédiaire d'un canal bruité, comprenant :
- des moyens pour recevoir une deuxième chaîne numérique correspondant à une première chaîne numérique transmise par le lecteur, aux erreurs introduites par le canal bruité près ;
- des moyens pour introduire des erreurs artificielles dans la deuxième chaîne numérique ;
- des moyens pour déterminer une nouvelle deuxième chaîne numérique à partir de la deuxième chaîne numérique, de façon à prendre l'avantage sur un éventuel attaquant passif ;
- des moyens pour appliquer un protocole de correction d'erreurs à la nouvelle deuxième chaîne numérique ; et
- des moyens pour appliquer une fonction de hachage à la nouvelle deuxième chaîne numérique.

D'autres particularités et avantages de la présente invention apparaîtront dans la description ci-après d'exemples de réalisation non limitatifs, en référence aux dessins annexés, dans lesquels :
- la figure 1 est un schéma montrant de façon simplifiée un système dans lequel l'invention peut être mise en oeuvre ;
- les figures 2-5 montre des chaînes numériques simplifiées mises en oeuvre dans un exemple de réalisation de l'invention ;
- la figure 6 est un schéma illustrant de façon simplifiée une opération de hachage mise en oeuvre dans un exemple de réalisation de l'invention.

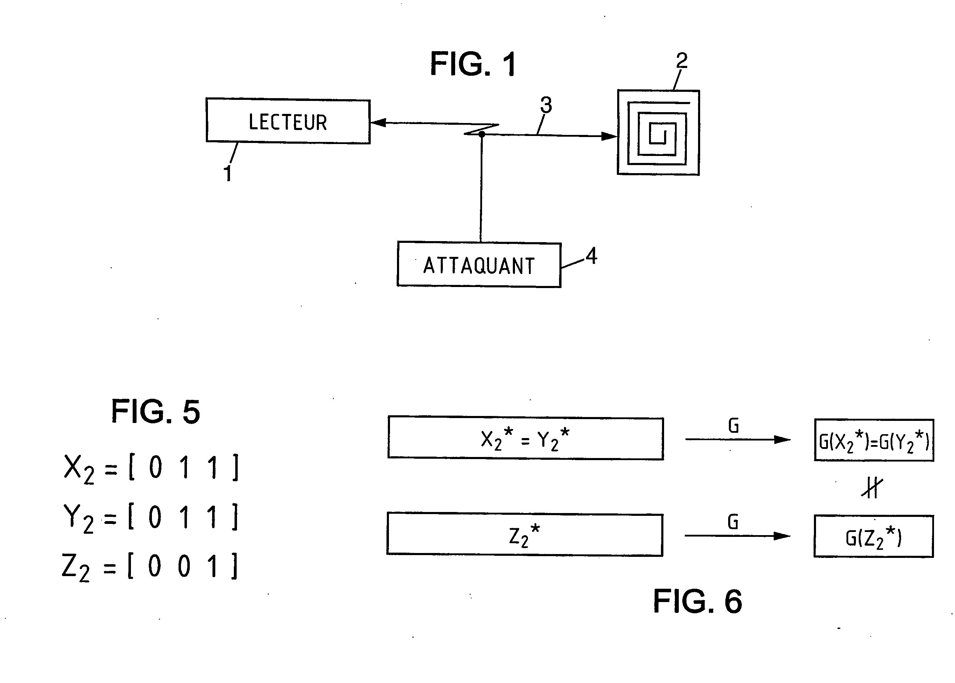

La figure 1 montre un lecteur RFID 1 apte à communiquer avec une étiquette RFID 2. On notera que tout autre type de marqueur sans fil (carte à puce, marqueur infrarouge, etc.) ayant des capacités pour communiquer avec un lecteur correspondant pourrait également être utilisé dans le cadre de l'invention.

Le lecteur 1 et l'étiquette 2 sont aptes à échanger des chaînes numériques, c'est-à-dire des suites de valeurs numériques, par exemple binaires, par l'intermédiaire d'un canal de communication radio 3. Le canal 3 est généralement bruité, c'est-à-dire qu'il introduit des erreurs dans chaque transmission. Ainsi, lorsque le lecteur 1 transmet une chaîne numérique sur le canal 3, l'étiquette 2 reçoit une chaîne numérique qui diffère plus ou moins de la chaîne numérique transmise en fonction du niveau de bruit introduit par le canal 3.

On suppose par ailleurs qu'un attaquant passif 4 tente d'acquérir les données échangées entre le lecteur 1 et l'étiquette 2. A cet effet, l'attaquant 4 écoute le canal 3 et peut effectuer tout type d'opération sur les données acquises afin de déjouer la sécurité mise en oeuvre entre le lecteur 1 et l'étiquette. A titre d'exemple, l'attaquant 4 peut mettre en oeuvre les mêmes opérations que le lecteur 1 ou l'étiquette 2.

Dans l'exemple qui va être décrit ci-après, on cherche à obtenir à l'étiquette 2 une information, ou "clé", sans que l'attaquant 4 puisse l'acquérir lui-même. Cette clé pourra ensuite être utilisée pour mettre en oeuvre des mécanismes de sécurité entre le lecteur 1 et l'étiquette 2.

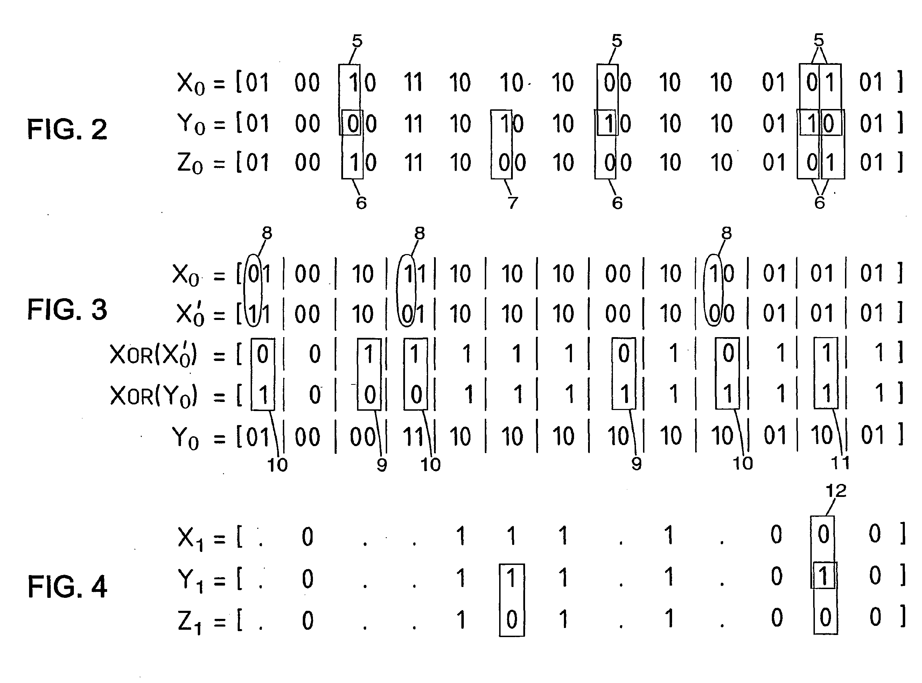

La figure 2 montre un exemple de chaîne numérique X₀ transmise par le lecteur 1 à destination de l'étiquette 2 par l'intermédiaire du canal bruité 3. On notera que l'exemple de chaîne numérique choisi comporte un nombre réduit de bits, c'est-à-dire d'éléments binaires, pour faciliter la compréhension des opérations mises en oeuvre. En réalité, les chaînes numériques transmises par le lecteur peuvent être de l'ordre de la dizaine de milliers de bits par exemple.

Du fait du bruit présent sur le canal 3, l'étiquette 2 reçoit une chaîne numérique Y₀ dont certains bits diffèrent des bits correspondants de X₀. Ces différences 5 ont été représentées sur la figure 2. Elles sont au nombre de quatre.

On choisit par la suite de considérer la chaîne numérique Y₀ comme la chaîne de référence, c'est-à-dire que Y₀ est considérée, par convention, comme ne comportant pas d'erreur. En revanche, les différences entre des bits d'autres chaînes numériques et les bits correspondants de Y₀ sont considérées comme des erreurs. Bien sûr, il s'agit là d'une hypothèse. D'autres choix de chaîne de référence sont également possibles, comme X₀ par exemple.

L'attaquant 4, qui écoute le canal bruité 3 reçoit, quant à lui, une chaîne numérique Z₀ qui diffère de X₀ du fait du bruit introduit par le canal 3. Z₀ diffère aussi de Y₀, notamment parce que l'attaquant peut être situé à un endroit légèrement différent de l'étiquette 2 et parce que les caractéristiques du canal 3 peuvent varier dans le temps et dans l'espace. Les erreurs contenues dans Z₀ peuvent être indépendantes ou relativement peu corrélées de celles contenues dans Y₀.

Ainsi, on constate dans l'exemple illustré sur la figure 2 que Z₀ présente cinq différences avec Y₀. Quatre de ces différences (différences 6) sont les mêmes que les différences 5 entre X₀ et la chaîne de référence Y₀, tandis que la cinquième (différence 7) est une erreur introduite par le canal 3 entre le lecteur 1 et l'attaquant 4.

Selon l'invention, le lecteur 1 calcule une nouvelle chaîne numérique X'₀, en remplacement de X₀, en modifiant certains bits de X₀. Cette modification consiste ainsi à introduire des erreurs artificielles, par exemple de façon aléatoire, dans X₀. Ces erreurs artificielles ne dépendent pas du canal bruité 3. Elles se surajoutent aux erreurs "naturelles" introduites par le canal bruité 4. La conjonction des erreurs naturelles et artificielles entre le lecteur 1 et l'étiquette 2 empêche ainsi l'attaquant 4, même s'il possède des capacités d'écoute suffisantes, de découvrir une quelconque corrélation entre ces erreurs et les erreurs qu'il subit lui-même en écoutant le canal bruité 3. En effet, même si les erreurs naturelles introduites par le canal 3 au niveau de l'étiquette 2 et de l'attaquant 4 sont corrélées, l'introduction additionnelle d'erreurs artificielles par le lecteur 1 atténue voire supprime cette corrélation.

En variante, les erreurs artificielles peuvent être introduites par l'étiquette 2 dans la chaîne numérique Y₀. Elles peuvent aussi être introduites à la fois dans les deux chaînes numériques X₀ et Y₀, par le lecteur 1 et l'étiquette 2 respectivement.

Dans l'exemple illustré sur la figure 3, trois erreurs artificielles ont été introduites par le lecteur 1 dans la chaîne numérique X₀, en transformant des valeurs "1" en "0" et inversement. De ce fait, la chaîne modifiée X'₀ comprend trois différences avec X₀ (différences 8).

Les autres opérations décrites ci-après sont connues.

On effectue tout d'abord une phase de distillation d'avantage dans laquelle on augmente la probabilité que l'attaquant 4 ait une chaîne numérique présentant un plus grand nombre de différences avec X'₀ que la chaîne numérique obtenue au niveau de l'étiquette 2. Autrement dit, cette phase permet au couple lecteur 1 - étiquette 2 de prendre l'avantage sur l'attaquant passif. Un exemple d'opérations mises en oeuvre dans une telle phase de distillation d'avantage a été divulgué par Martin Gander et Ueli Maurer, dans l'article "On the secret-key rate of binary random variables, Proc. 1994 IEEE International Symposium on Information Theory (Abstracts), 1994", p. 351. Bien sûr, d'autres opérations peuvent être mises en oeuvre à condition qu'elles permettent bien de prendre l'avantage sur l'attaquant passif.

Dans un exemple d'une telle phase de distillation d'avantage, les chaînes numériques X'₀ et Y₀ sont décomposées en groupes de N valeurs numériques, avec N entier. Dans l'exemple illustré sur la figure 3, les bits de X'₀ et Y₀ sont groupés par couple (N=2). Puis, pour chaque couple ainsi identifié, on applique un "OU exclusif" (XOR) de façon à obtenir un "1" lorsque les bits du couple considéré sont différents et un "0" lorsqu'ils sont identiques.

On compare ensuite les résultats du OU exclusif sur des groupes correspondants (c'est-à-dire de même rang) de X'₀ et Y₀. Pour cela, chacun du lecteur 1 et de l'étiquette 2 transmet sur le canal 3 les résultats du OU exclusif qu'il a effectué.

On détermine alors de nouvelles chaînes numériques X₁ et Y₁, en conservant les premières valeurs numériques de chaque groupe de X'₀ et Y₀ respectivement pour lequel le résultat du OU exclusif est le même que pour le groupe correspondant de l'autre chaîne numérique (Y₀ ou X'₀). Les autres groupes sont ignorés et ne sont pas pris en compte dans la constitution des chaînes numériques X₁ et Y₁.

Dans l'exemple illustré sur la figure 3, on constate cinq différences entre des bits du OU exclusif effectué respectivement sur X'₀ et Y₀. Certaines de ces différences ont pour cause les erreurs naturelles introduites par le canal 3 (différences 9). D'autres différences s'expliquent par l'introduction d'erreurs artificielles dans la chaîne initiale X₀ (différences 10). On notera que le OU exclusif effectué sur l'avant-dernier couple (référence 11 sur la figure 3) a le même résultat, à savoir un "1", pour X'₀ et Y₀ du fait que chacun des deux bits du couple en question de X₀ a été modifié par le canal bruité 3 avant sa réception à l'étiquette 2.

Les chaînes numériques X₁ et Y₁ résultant de cette phase de distillation d'avantage sont représentées sur la figure 4. Y₁ devient alors la nouvelle référence. On constate que X₁ et Y₁ présentent une seule différence entre elles (différence 12), contre quatre différences entre X₀ et Y₀. On comprend ainsi que la distillation d'avantage peut faire chuter rapidement le nombre de différences entre les chaînes numériques du lecteur 1 et de l'étiquette 2.

Si l'attaquant 4 décide d'agir comme le font le lecteur 1 et l'étiquette 2, il peut alors capter les résultats du OU exclusif échangés entre ceux-ci et en déduire une chaîne Z₁ selon les mêmes principes. Z₁ comprend alors le premier bit de chaque couple de Z₀ ayant le même rang que deux couples correspondants de X'₀ et Y₀ pour lesquels le même résultat du OU exclusif a été obtenu. Comme le montre la figure 4, la chaîne numérique Z₁ obtenue dans l'exemple comprend deux différences avec Y₁ et toujours une différence avec X₁.

La phase de distillation d'avantage peut être répétée un nombre n de fois, avec n entier, jusqu'à ce que la chaîne numérique Xₙ ait un taux d'erreur par rapport à Yₙ inférieur à un seuil choisi. Par exemple, le nombre n peut être choisi en fonction du bruit estimé sur le canal de communication 3.

Dans l'exemple illustré sur les figures, une identité entre les chaînes numériques du lecteur 1 et de l'étiquette 2 est obtenue dès la deuxième passe de la phase de distillation d'avantage. En effet, comme cela est montré sur la figure 5, les chaînes X₂ et Y₂ sont identiques.

En revanche, la chaîne Z₂ obtenue, lors de la deuxième passe, par un attaquant 4 qui met en oeuvre les mêmes opérations que le lecteur 1 et l'étiquette 2, reste différente de la chaîne de référence Y₂.

On peut montrer que quel que soit le bruit présent sur le canal bruité 3 et quelle que soit la technique employée par l'attaquant 4 pour tenter de découvrir les chaînes numériques obtenues par le lecteur 1 et/ou l'étiquette 2, cet attaquant obtiendra toujours une chaîne numérique erronée, c'est-à-dire différente de celles de lecteur 1 et de l'étiquette 2.

Une phase de réconciliation d'information est ensuite mise en oeuvre. Elle consiste à éliminer encore des erreurs résiduelles dans la chaîne numérique du lecteur 1 (ou de l'étiquette 2 lorsque la référence est la chaîne du lecteur), pour les cas où la distillation d'avantage n'aurait pas déjà supprimé toutes les erreurs.

Dans cette phase de réconciliation d'information, un protocole de correction d'erreur est utilisé. Ce protocole devrait de préférence être choisi pour minimiser les informations qui vont être émises sur le canal 3 et qui pourraient représenter des informations pertinentes exploitables par l'attaquant 4.

Un exemple de protocole est le protocole "Cascade" décrit par de G. Brassard et L. Salvail dans l'article "Secret-key reconciliation by public discussion, EUROCRYPT '93 : Workshop on the theory and application of cryptographic techniques on Advances in cryptology, Springer-Verlag New York, Inc., 1994, pp.410-423". '

Avec le protocole Cascade, les deux parties à la communication s'accordent aléatoirement et publiquement sur une permutation qu'ils appliquent respectivement sur les chaînes numériques qu'ils ont obtenues à l'issue de la distillation d'avantage. Le résultat de ces permutations est ensuite scindé en blocs de taille adaptative déterminée. Pour chaque bloc ainsi obtenu, on exécute une primitive DICHOT. Lorsque la parité des blocs correspondants pour les deux parties est identique, la primitive calculée retourne la position d'une différence au sein de ces blocs. Puis l'une des partie corrige cette erreur. Des étapes supplémentaires dites de "bactracking" sont également prévues pour s'assurer que l'ensemble référençant tous les blocs dont la parité a été modifiée suite à la correction d'une erreur soit finalement vide.

De préférence, on appliquera au lecteur 1 et à l'étiquette 2, un protocole connu inspiré de Cascade, mais dans lequel (i) la permutation mise en oeuvre est pré-câblée et non aléatoire, (ii) la taille des blocs est fixe et non adaptative et (iii) le bactracking n'est pas mis en oeuvre. La mise en oeuvre d'un tel protocole allégé a l'avantage d'être moins coûteuse que pour Cascade, notamment en termes de capacité de calcul et de taille de mémoire. En pratique, la majorité des erreurs est corrigée dès la première passe, si bien que les performances de ce protocole allégé sont satisfaisantes.

A l'issue de la phase de réconciliation d'information, le lecteur 1 et l'étiquette 2 disposent d'une même chaîne numérique avec un niveau de probabilité prédéterminé. Dans l'exemple décrit en référence aux figures, on note X₂* et Y₂* les chaînes numériques identiques ainsi obtenues par le lecteur 1 et l'étiquette 2 respectivement, c'est-à-dire les chaînes X₂ et Y₂ après correction. L'attaquant 4 possède, quant à lui, une chaîne numérique Z₂* qui diffère de X₂* et Y₂*, grâce notamment à l'introduction initiale des erreurs artificielles dans X₀ et également grâce aux propriétés des phases de distillation d'avantage et de réconciliation d'information.

Une troisième phase dite d'amplification de secret est ensuite mise en oeuvre. L'objet d'une telle phase a été divulgué par Charles H. Bennett, Gilles Brassard, Claude Crépeau, and Ueli M. Maurer, dans l'article "Generalized privacy amplification, IEEE Transaction on information Theory (1995)". Elle consiste à appliquer une fonction de hachage aux chaînes numériques obtenues par le lecteur 1 et l'étiquette 2 à l'issue de la phase précédente, c'est-à-dire à X₂* et Y₂* dans notre exemple.

Une fonction de hachage est une fonction de compression permettant d'obtenir une information plus courte qu'une information initiale à laquelle elle est appliquée. Elle a en outre comme propriété de délivrer des résultats très différents à partir d'informations initiales qui diffèrent même légèrement, c'est-à-dire qu'elles accentuent les différences entre des informations distinctes, de façon à éviter qu'on puisse retrouver facilement l'information initiale à partir du résultat du hachage.

Un exemple de fonction de hachage pouvant être utilisée est celui divulgué par Kaan Yüksel, dans le document "Universal hashing for ultra-low-power cryptographic hardware applications, Master's thesis, Worcester Polytechnic Institute, 2004". Cette fonction a pour avantage de requérir très peu de ressources calculatoires, ce qui est conforme aux contraintes des étiquettes RFID.

Le document "Linking Information Reconciliation and Privacy Amplification, JOURNAL OF CRYPTOLOGY, 1997, pages 1-12, CHRISTIAN CACHIN,UELI MAURER, USA" divulgue une procédé de communication sans fil dans un canal bruité, comprenant la transmission d'une première chaîne numérique, la réception d'une deuxième chaîne numérique correspondant a la première chaîne numérique, aux erreurs introduites par le canal bruité près, une phase de distillation d'avantage dans laquelle on détermine une nouvelle première chaîne numérique a partir de la première chaîne numérique et on détermine une nouvelle deuxième chaîne numérique a partir de la deuxième chaîne numérique, de façon a prendre l'avantage sur un éventuel attaquant passif; une phase de réconciliation d'information dans laquelle on applique un protocole de correction d'erreurs a la nouvelle première et la nouvelle deuxième chaîne numérique, de façon que, a l'issue de cette phase de réconciliation, la nouvelle première et la nouvelle deuxième chaîne numérique soient identiques avec un niveau de probabilité prédéterminé ; et une phase d'amplification de secret dans laquelle on applique une fonction de hachage a la nouvelle première et a la nouvelle deuxième chaîne numérique.

La figure 6 montre l'application de la fonction de hachage G à X₂* et Y₂*, Puisque X₂*=Y₂*, on a aussi G(X₂*)=G(Y₂*). Ainsi, le lecteur 1 et l'étiquette 2 disposent finalement d'une même chaîne numérique de taille limitée. Dans un cas réel, G(X₂*) et G(Y₂*) sont par exemple des chaînes numériques comprenant de l'ordre d'une centaine de bits.

A l'inverse, l'attaquant 4 dispose d'une chaîne Z₂* différente de X₂* et Y₂*. Même si cet attaquant connaît la fonction de hachage utilisée par le lecteur 1 et l'étiquette 2, et tente de calculer G(Z₂*), il obtiendra ainsi une chaîne numérique différente de G(X₂*) et G(Y₂*).

Par la suite, la chaîne numérique G(X₂*)=G(Y₂*) commune au lecteur 1 et à l'étiquette 2 peut être utilisée pour sécuriser les échanges sur le canal 3. Par exemple, cette chaîne peut être utilisée comme une clé secrète permettant d'authentifier le lecteur 1 ou l'étiquette 2, ou bien de chiffrer les données transmises sur le canal bruité 3 par exemple. D'autres applications sont également envisageables à partir de la détermination de cette clé secrète.

## Revendications

1. Procédé de communication entre un lecteur d'identification sans fil (1) et un marqueur d'identification sans fil (2) par l'intermédiaire d'un canal bruité (3), comprenant :
/a/ la transmission d'une première chaîne numérique (X₀) depuis le lecteur vers le marqueur ;
/b/ la réception, au marqueur, d'une deuxième chaîne numérique (Y₀) correspondant à la première chaîne numérique, aux erreurs introduites par le canal bruité près ;
/c/ l'introduction d'erreurs artificielles dans l'une au moins de la première et de la deuxième chaîne numérique ;
/d/ une phase de distillation d'avantage dans laquelle on détermine, au lecteur, une nouvelle première chaîne numérique (X₁) à partir de la première chaîne numérique et on détermine, au marqueur, une nouvelle deuxième chaîne numérique (Y₁) à partir de la deuxième chaîne numérique, de façon à prendre l'avantage sur un éventuel attaquant passif ;
/e/ une phase de réconciliation d'information dans laquelle on applique un protocole de correction d'erreurs à la nouvelle première (X₂) et la nouvelle deuxième (Y₂) chaîne numérique, de façon que, à l'issue de l'étape /e/, la nouvelle première (X₂*) et la nouvelle deuxième (Y₂*) chaîne numérique soient identiques avec un niveau de probabilité prédéterminé ; et
/f/ une phase d'amplification de secret dans laquelle on applique une fonction de hachage (G) à la nouvelle première (X₂*) et à la nouvelle deuxième (Y₂*) chaîne numérique.

2. Procédé selon la revendication 1, dans lequel la phase de distillation d'avantage comprend les étapes suivantes :
- on décompose en groupes de N valeurs numériques successives, avec N entier, la première (X₀') et la deuxième (Y₀) chaîne numérique ;
- on effectue un OU exclusif sur chacun desdits groupes ;
- on échange les résultats du OU exclusif entre le lecteur et le marqueur;
- on détermine, au lecteur, la nouvelle première chaîne numérique (X₁) à partir de la première valeur numérique de chaque groupe de la première chaîne numérique pour lequel le résultat du OU exclusif est identique au résultat du OU exclusif effectué sur le groupe correspondant de la deuxième chaîne numérique ; et
- on détermine, au marqueur, la nouvelle deuxième chaîne numérique (Y₁) à partir de la première valeur numérique de chaque groupe de la deuxième chaîne numérique pour lequel le résultat du OU exclusif est identique au résultat du OU exclusif effectué sur le groupe correspondant de la première chaîne numérique.

3. Procédé selon la revendication 1 ou 2, dans lequel l'introduction d'erreurs artificielles de l'étape /c/ comprend une modification aléatoire de valeurs numériques de l'une au moins de la première (X₀) et de la deuxième (Y₀) chaîne numérique.

4. Procédé selon l'une quelconque des revendications précédentes, dans lequel l'étape /d/ est répétée un nombre de fois dépendant du bruit estimé sur le canal bruité (3).

5. Procédé selon l'une quelconque des revendications précédentes, dans lequel le protocole de correction d'erreurs est choisi de façon à laisser fuir un minimum d'information vers un éventuel attaquant passif.

6. Lecteur d'identification sans fil (1) apte à communiquer avec un marqueur d'identification sans fil (2) par l'intermédiaire d'un canal bruité (3), comprenant :
- des moyens pour transmettre une première chaîne numérique (X₀) vers le marqueur ;
- des moyens pour introduire des erreurs artificielles dans la première chaîne numérique ;
- des moyens pour déterminer une nouvelle première chaîne numérique (X₁) à partir de la première chaîne numérique, de façon à prendre l'avantage sur un éventuel attaquant passif ;
- des moyens pour appliquer un protocole de correction d'erreurs à la nouvelle première chaîne numérique (X₂) ; et
- des moyens pour appliquer une fonction de hachage (G) à la nouvelle première chaîne numérique (X₂*).

7. Marqueur d'identification sans fil (2) apte à communiquer avec un lecteur d'identification sans fil (1) par l'intermédiaire d'un canal bruité (3), comprenant :
- des moyens pour recevoir une deuxième chaîne numérique (Y₀) correspondant à une première chaîne numérique (X₀) transmise par le lecteur, aux erreurs introduites par le canal bruité près ;
- des moyens pour introduire des erreurs artificielles dans la deuxième chaîne numérique ;
- des moyens pour déterminer une nouvelle deuxième chaîne numérique (Y₁) à partir de la deuxième chaîne numérique, de façon à prendre l'avantage sur un éventuel attaquant passif ;
- des moyens pour appliquer un protocole de correction d'erreurs à la nouvelle deuxième chaîne numérique (Y₂) ; et
- des moyens pour appliquer une fonction de hachage à la nouvelle deuxième chaîne numérique (Y₂*).

## Claims

1. A method for communicating between a wireless identification reader (1) and a wireless identification marker (2) via a noisy channel (3), comprising:
/a/ the transmission of a first numeric string (X₀) from the reader to the marker;
/b/ the reception, on the marker, of a second numeric string (Y₀) corresponding to the first numeric string, excepting errors introduced by the noisy channel;
/c/ the introduction of artificial errors into at least one of the first and second numeric strings;
/d/ an advantage distillation phase in which a new first numeric string (X₁) is determined on the reader on the basis of the first numeric string, and a new second numeric string (Y₁) is determined on the marker on the basis of the second numeric string, in such a way as to take the advantage with respect to a possible passive attacker;
/e/ an information reconciliation phase, wherein an error-correction protocol is applied to the new first (X₂) and the new second (Y₂) numeric string in such a way that, at the end of step /e/, the new first (X₂*) and the new second (Y₂*) numeric string are identical with a predetermined probability level; and
/f/ a secrecy amplification phase, wherein a hash function (G) is applied to the new first (X₂*) and the new second (Y₂*) numeric string.

2. The method as claimed in claim 1, in which the advantage distillation phase comprises the following steps:
- the first (X₀') and second (Y₀) numeric string are divided up into groups of N successive numerical values, where N is an integer;
- an exclusive OR is carried out on each of said groups;
- the results of the exclusive OR are exchanged between the reader and the marker;
- the new first numeric string (X₁) is determined on the reader on the basis of the first numerical value of each group of the first numeric string for which the result of the exclusive OR is identical to the result of the exclusive OR carried out on the corresponding group of the second numeric string; and
- the new second numeric string (Y₁) is determined on the marker on the basis of the first numerical value of each group of the second numeric string for which the result of the exclusive OR is identical to the result of the exclusive OR carried out on the corresponding group of the first numeric string.

3. The method as claimed in claim 1 or 2, in which the introduction of artificial errors in step /c/ comprises a random modification of numerical values of at least one of the first (X₀) and the second (Y₀) numeric string.

4. The method as claimed in any one of the preceding claims, in which step /d/ is repeated a number of times depending on the estimated noise of the noisy channel (3).

5. The method as claimed in any one of the preceding claims, in which the error-correction protocol is chosen in such a way as to allow a minimum of information to be leaked to a possible passive attacker.

6. A wireless identification reader (1) suitable for communicating with a wireless identification marker (2) via a noisy channel (3), comprising:
- means for transmitting a first numeric string (X₀) to the marker;
- means for introducing artificial errors into the first numeric string;
- means for determining a new first numeric string (X₁) on the basis of the first numeric string, in such a way as to take the advantage with respect to a possible passive attacker;
- means for applying an error-correction protocol to the new first numeric string (X₂); and
- means for applying a hash function (G) to the new first numeric string (X₂*).

7. A wireless identification marker (2) suitable for communicating with a wireless identification reader (1) via a noisy channel (3), comprising:
- means for receiving a second numeric string (Y₀) corresponding to a first numeric string (X₀) transmitted by the reader, excepting errors introduced by the noisy channel;
- means for introducing artificial errors into the second numeric string;
- means for determining a new second numeric string (Y₁) on the basis of the second numeric string, in such a way as to take the advantage with respect to a possible passive attacker;
- means for applying an error-correction protocol to the new second numeric string (Y₂); and
- means for applying a hash function to the new second numeric string (Y₂*).

## Patentansprüche

1. Verfahren zur Kommunikation zwischen einem drahtlosen Kennungsleser (1) und einer drahtlosen Kennungsmarke (2) über einen verrauschten Kanal (3), umfassend:
a) die Übertragung einer ersten digitalen Folge (X₀) vom Leser zur Marke;
b) den an der Marke erfolgenden Empfang einer zweiten digitalen Folge (Y₀), die der ersten digitalen Folge bis auf die durch den verrauschten Kanal eingebrachten Fehler entspricht;
c) das Einfügen von künstlichen Fehlern in wenigstens eine der zwei digitalen Folgen;
d) eine Phase der Vorteilsdestillation, in der am Leser eine neue erste digitale Folge (X₁), ausgehend von der ersten digitalen Folge, bestimmt wird und in der an der Marke eine neue zweite digitale Folge (Y₁), ausgehend von der zweiten digitalen Folge, bestimmt wird, dergestalt, dass ein Vorteil gegenüber einem möglichen passiven Angreifer gewonnen wird;
e) eine Phase des Informationsabgleichs, in der ein Fehlerkorrekturprotokoll auf die neue erste digitale Folge (X₂) und auf die neue zweite digitale Folge (Y₂) angewendet wird, dergestalt, dass am Ende des Schritts e) die neue erste digitale Folge (X₂*) und die neue zweite digitale Folge (Y₂*) mit einem vorbestimmten Wahrscheinlichkeitsniveau identisch sind; und
f) eine Phase der Verstärkung der Vertraulichkeit, in der eine Hashfunktion (G) auf die neue erste digitale Folge (X₂*) und auf die neue zweite digitale Folge (Y₂*) angewendet wird.

2. Verfahren gemäß Anspruch 1, bei dem die Phase der Vorteilsdestillation folgende Schritte umfasst:
- Zerlegen der ersten digitalen Folge (X₀') und der zweiten digitalen Folge (Y₀) in Gruppen von N aufeinanderfolgenden digitalen Werten, wobei N ganzzahlig ist;
- Durchführen einer exklusiv-ODER Verknüpfung an jeder der genannten Gruppen;
- Austausch der Ergebnisse der exklusiv-ODER Verknüpfung zwischen dem Leser und der Marke;
- am Leser erfolgendes Bestimmen der neuen ersten digitalen Folge (X₁) ausgehend von dem ersten digitalen Wert jeder Gruppe der ersten digitalen Folge, für die das Ergebnis der exklusiv-ODER Verknüpfung identisch ist mit dem Ergebnis der an der entsprechenden Gruppe der zweiten digitalen Folge durchgeführten exklusiv-ODER Verknüpfung; und
- Bestimmen der neuen zweiten digitalen Folge (Y₁) an der Marke, ausgehend von dem ersten digitalen Wert jeder Gruppe der zweiten digitalen Folge, für die das Ergebnis der exklusiv-ODER Verknüpfung identisch ist mit der an der entsprechenden Gruppe der ersten digitalen Folge durchgeführten exklusiv-ODER Verknüpfung.

3. Verfahren gemäß Anspruch 1 oder 2, bei dem das Einfügen künstlicher Fehler im Schritt c) eine zufällige Veränderung digitaler Werte wenigstens der ersten digitalen Folge (X₀) oder der zweiten digitalen Folge (Y₀) beinhaltet.

4. Verfahren nach einem der vorangegangenen Ansprüche, bei dem der Schritt d) mehrfach abhängig vom geschätzten Rauschen auf dem verrauschten Kanal (3) wiederholt wird.

5. Verfahren nach einem der vorangegangenen Ansprüche, bei dem das Fehlerkorrekturprotokoll so gewählt wird, dass ein Minimum an Informationen zu einem möglichen passiven Angreifer abfließen kann.

6. Drahtloser Kennungsleser (1), der mit einer drahtlosen Kennungsmarke (2) über einen verrauschten Kanal (3) kommunizieren kann, umfassend:
- Mittel zum Übertragen einer ersten digitalen Folge (X₀) zu einer Marke;
- Mittel zum Einfügen künstlicher Fehler in die erste digitale Folge;
- Mittel zum Bestimmen einer neuen ersten digitalen Folge (X₁), ausgehend von der ersten digitalen Folge, dergestalt, dass gegenüber einem möglichen passiven Angreifer ein Vorteil gewonnen wird;
- Mittel zum Anwenden eines Fehlerkorrekturprotokolls auf die neue erste digitale Folge (X₂); und
- Mittel zum Anwenden einer Hashfunktion (G) auf die neue erste digitale Folge (X₂*).

7. Drahtlose Kennungsmarke (2), die mit einem drahtlosen Kennungsteser (1) über einen verrauschten Kanal (3) kommunizieren kann, umfassend:
- Mittel zum Empfangen einer zweiten digitalen Folge (Y₀), die bis auf die durch den verrauschten Kanal eingebrachten Fehler einer ersten digitalen Folge (X₀) entspricht, die vom Leser ausgesandt wurde;
- Mittel zum Einfügen künstlicher Fehler in die zweite digitale Folge;
- Mittel zum Bestimmen einer neuen zweiten digitalen Folge (Y₁), ausgehend von der zweiten digitalen Folge, sodass ein Vorteil gegenüber einem möglichen passiven Angreifer gewonnen wird;
- Mittel zum Anwenden eines Fehlerkorrekturprotokolls auf die neue zweite digitale Folge (Y₂); und
- Mittel zum Anwenden einer Hashfunktion auf die neue zweite digitale Folge (Y₂*).
